# EUROPEAN PATENT SPECIFICATION

(11) **EP 1 375 988 B1**
(45) Date of publication and mention of the grant of the patent: **26.09.2007**
(21) Application number: 03445077.5
(22) Date of filing: 18.06.2003
(51) Int. Cl.: F16K 15/02, F16K 17/164, E03C 1/10

(54) **A valve device**
Ventilanordnung
Dispositif a soupapes

(30) Priority: 20.06.2002 SE 0201896
(43) Date of publication of application: 02.01.2004
(73) Proprietor: AB DURGO, S-169 03 Solna (SE)
(72) Inventor: Björn, Andersson, S-168 58 Bromma (SE); Andersson, Lars, S-183 42 Täby (SE)
(74) Representative: Sundström, Per Olof

(56) References cited:
- EP-A- 0 250 282
- EP-A- 0 750 074
- DE-A- 19 851 405
- GB-A- 2 088 023
- US-A- 4 646 775
- US-A- 5 079 781
- US-A- 5 425 393
- US-A- 5 564 457
- US-A- 5 701 926
- US-B1- 6 178 998

## Description

The present invention relates to a valve arrangement of the kind defined in the preamble of the accompanying Claim 1.

Such a valve arrangement is known from the documents GB 2088023, US 4646775, US 6178998, EP 0750074, US 5564457 and US 5701926.

The present invention thus relates to an anti-siphoning valve which is preferably connected to an outflow conduit from a tap water network, particularly when the outflow conduit or delivery pipe communicates with a fluid that may be dirty, poisonous or otherwise contaminated. The valve arrangement functions to prevent such contaminated liquid from being sucked back into the tap water network should the pressure suddenly fall to below atmospheric pressure, for instance as a result of a fire engine taking/drawing water from the network. In the absence of such an anti-siphoning valve, it is possible that tap water in the network may become contaminated and then distributed via the tap water supply sites, when the network pressure is re-established.

Such an anti-siphoning valve arrangement may comprise a check valve coupled in series with the water supply conduit. However, the use of a check valve affords a less attractive solution, since the valve opens and closes each time the tap valve of the outfeed conduit is opened and closed. Another drawback with the use of a check valve is that the valve is spring biased towards its closed state and therefore presents significant flow resistance.

It is also known in practice in this regard to couple the outflow conduit of the system to a valve housing which includes a water transit or throughflow channel and which houses a valve unit that includes an opening through a housing wall. Arranged in the opening is a vacuum valve through which air is sucked from the atmosphere and into the interior of the water conduit and the tap water system, when the pressure of the system drops below atmospheric pressure. One advantage with such a valve arrangement is that the vacuum valve will open and close solely in the event of a momentary subpressure in the tap water system and therefore presents no real resistance in the water outflow conduit. Consequently, this valve arrangement has been used as an anti-siphoning valve. One problem with this valve arrangement is that it fails to meet recently sharpened regulations laid down in CENTC 164 SS-NN 1717. It is laid down that in respect of an anti-siphoning valve arrangement of this vacuum type, the anti-siphoning pressure downstream of the valve may not be greater than 20 cm water column when an upstream vacuum (0.5 ATM) is applied to the valve via the water outflow conduit, which conduit shall have a constant cross-sectional area along the whole of its length, wherewith the valve housing of the valve arrangement shall include a water transit channel of the same cross-sectional area as said conduit.

The known valve arrangement has a housing which includes a bore hole through the housing wall adjacent the water transit channel. A vacuum valve is mounted in this bore hole (i.e. a valve that opens in response to sub-atmospheric pressure in the housing). It has been found that a valve arrangement of this design fails to satisfy the aforesaid new standards. Naturally, one alternative is to give the valve housing a larger cross-sectional area and to give a connecting pipe socket in which the vacuum valve is placed a larger diameter so that the vacuum valve will have a large air transit area and thereby be able to fulfil the new standards more completely. However, such a design presents a complication, not solely from the aspect of manufacture but also because of the resultant pronounced first cross-sectional area of the valve housing, at least in the proximity of the connecting socket, which hampers drawing or orientation of the water outfeed conduit, because it must be possible, nevertheless, to connect-up the vacuum valve despite the largeness of the socket in which the vacuum valve shall be fitted. Moreover, it has been found that even when the valve was enlarged to an air transit cross-sectional area of more than two times the size of the water transit channel, the valve arrangement could still only just about satisfy the requirements of the new standards.

Accordingly, an object of the present invention is to provide a valve arrangement of the aforesaid kind and for the aforesaid field of use with which said problems are resolved either totally or partially.

This object is achieved by the invention.

The invention is defined in the accompanying claim 1.

Further embodiments of the invention will be apparent from the accompanying dependent claims.

It has been found possible to arrange two or more vacuum valve units along the water conduit, wherein each unit has a free air transit area of roughly the same size as the transit area of the water outflow conduit and the water transit channel of the valve housing. This enables the valve housing to be given small dimensions in relation to the cross-sectional area of the water conduit while still enabling valve units of sufficiently free transit area to be mounted readily, i.e. problem free, in wall openings through the valve housing. It will surprise the person of average skill in this particular field to learn that two such vacuum valves located in mutually spaced relationship along the conduit were found to be capable of fulfilling the new standard requirements, particularly when the test carried out on a valve arrangement that had but a single vacuum valve whose transit or throughflow area was increased by a factor greater than 2 could only just fulfil the requirements of said standards.

In distinction, the present invention was found to achieve a surprisingly good effect. The provision of two vacuum valves mutually spaced in the longitudinal direction of the conduit resulted in limiting siphoning pressure to at most about 2 cm water column, even when testing at a subpressure of 0.8 ATM (absolute pressure 0.2 ATM), due to the fact that both valve units were mutually of one and the same size and each had an air transit area corresponding to the water transit area of the valve housing (corresponding to the water transit area of the conduit). The valve units were spaced 3 cm apart.

It is preferred in accordance with the invention that the valve units are spaced at least 3 cm apart along the water conduit. This distance may, of course, be greater, although the siphoning effect will increase significantly if the distance between the valve units is decreased.
According to preferred embodiments, the distance between the units is about 3 cm or more.

The reason for the surprisingly good effect afforded by the inventive arrangement is not clear, although the effect is very apparent and surprisingly powerful while enabling the valve housing to be given small cross-sectional dimensions so that the valve arrangement will not place any particular requirements on the orientation of the conduit in which the valve arrangement shall be fitted. Although the length of the valve housing is governed by the preferred minimum distance between the valve units in the case of certain embodiments, the total length of the valve arrangement is nevertheless not problematic.

The inventive valve arrangement can be produced in sizes corresponding to those of the conduit in which they are to be coupled, in the absence of changed conditions with regard to the valve units and their size relationship with the housing of the valve arrangement.

Naturally, the arrangement can include three or more vacuum valves disposed along the conduit so as to guard against the failure of a valve to open at a set vacuum.

The invention will now be described by way of example and with reference to the accompanying drawing, in which
Figure 1 is a schematic longitudinally sectioned view of an inventive valve arrangement in a passive state; and
Figure 2 is an end view of the valve according to Fig. 1 in an active state.

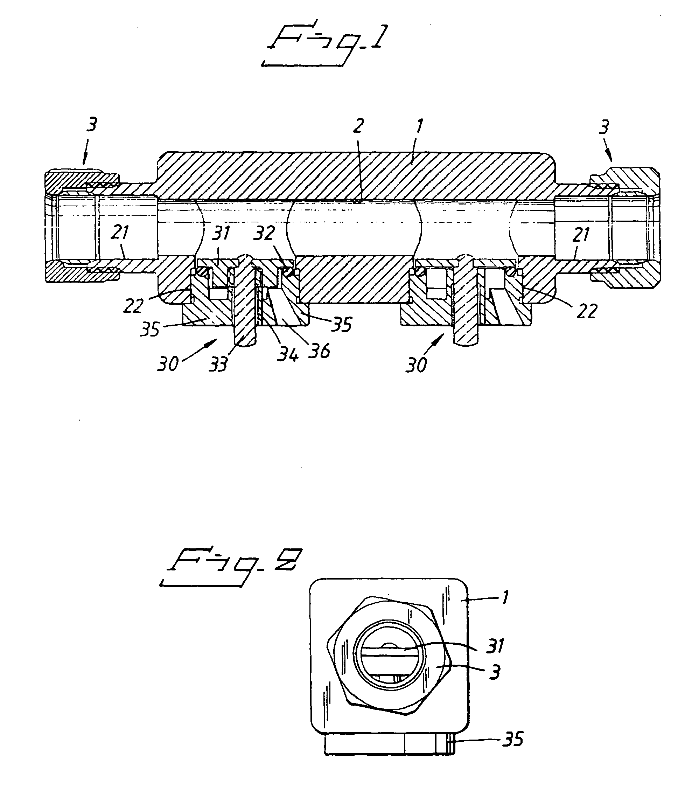

Figure 1 shows an elongate tubular valve housing 1 that includes a circular throughflow channel or transit 2. A pipe connector 3 is provided at each end of the housing 1. The ends of the channel 2 accordingly include a recessed portion 21 for receiving the end of the pipe (not shown). The illustrated pipe connector includes a clamping ring coupling.

The recess 21 corresponds to the wall thickness of the pipe, so that the channel 2 will have a cross-sectional area corresponding to the free cross-sectional area of the pipes joined to respective connectors 3.

Extending through the housing 1 are two bores 22 which lie in the same circumferential positions around the housing 1. A vacuum unit 30 is mounted, e.g. screwed, into each bore 22. The bore 22 intersects the channel 2 and is shown to have a slightly larger diameter than the channel 2 so as to be able to receive a valve plate 31 of corresponding diameter. The valve plate 31 rests sealingly against a seat that carries an O-ring 32. The valve plate is carried by a central shaft 33 guided in a guide 34. The guide 34 is carried by a bush 35 through the medium of radially extending arms 35, wherein the bush is fixed and connected sealingly to the wall of the bore 22 so that the bush will have a throughflow or transit channel 36 that is screened by the valve plate 31. The cross-sectional area of the transit channel corresponds generally to the cross-sectional area of the housing channel 2. As will be seen from Fig. 1, the plate 31 will be located outside the cross-sectional area of the channel 2 when said plate rests on its seat.

It will also be apparent from Fig. 1 that the vacuum valves 22, 30 are spaced mutually apart along the valve housing 1. This spacing will preferably correspond to a distance of about 3 cm or more in respect of conduits that have a diameter of at least one half inch. In the illustrated embodiment, the valves are spaced apart along the water transit channel 2 through a distance somewhat greater than 3 cm for a valve arrangement adapted for a thin-walled pipe of one half inch in diameter.

It will be evident from Figs 1 and 2 that the valve housing need only have a wall thickness that will enable a conventional connection to be established between the valve unit 30 and the wall of the bore 22, wherewith the air transit channel of the valve unit 30 may have a cross-sectional area corresponding to that of the channel 2. The valve units 30 will therefore have no troublesome protrusions from the valve housing 1 and the valve housing 1 may have aesthetically pleasing square cross-sectional shape in a typical fashion.

The inventive valve arrangements are produced in different sizes commensurate with respective conduit or pipe dimensions, and the inventive valve arrangements fulfil the requirements laid down in the CENTC 164 SS-NN 1717 standards extremely well.

The inventive valve arrangement is mounted conveniently in an upper part of a so called lyre (an inverted generally U-shaped bend) in the conduit, wherein the upper part of the lyre is suitably situated at a distance, e.g. 300 mm, above the parts of the conduit that connect with the lyre. The lyre (not shown) functions to prevent reflux to the central parts of the system.

## Claims

1. A valve arrangement for preventing the reflux of contaminated liquid through a water outfeed conduit from a pressurised tap water system, wherein the valve arrangement includes a valve housing having a throughflow channel (2), a wall that surrounds the channel (2), a vacuum valve unit (22,30), which comprises an opening (22) and a vacuum valve (30) in said opening, whereby atmospheric air can be sucked from the housing surroundings and into the tap water system via the vacuum valve when the system pressure falls beneath atmospheric pressure, **characterised in that** t the housing has two pipe connectors (3) at the ends of the channel (2) for series connection in said outfeed conduit the opening (22) is through the wall of the housing , and at least two such vacuum valve units (22, 30) are disposed at a distance from each other along the channel of the housing.

2. A valve arrangement according to Claim 1, **characterised in that** the vacuum valves have an air throughflow channel whose cross-sectional area is roughly equal to the cross-sectional area of the water throughflow channel (2) of the valve housing.

3. A valve arrangement according to Claim 1 or 2, **characterised in that** the vacuum valves are spaced apart along the water conduit by a distance of about 3 cm or more.

4. A valve arrangement according to any one of the preceding Claims, **characterised in that** the water throughflow channel (2) of the housing has a free diameter corresponding to the free area of the water throughflow channel (2).

## Patentansprüche

1. Ventilanordnung zur Verhinderung des Rückflusses verunreinigter Flüssigkeit durch eine Wasserabflußleitung aus einem druckbeaufschlagten Leitungswassersystem, wobei die Ventilanordnung ein Ventilgehäuse mit einem Durchflußkanal (2), einer Wand, die den Kanal (2) umgibt, einer Unterdruckventileinheit (22, 30), die eine Öffnung (22) umfaßt, und einem Unterdruckventil (30) in der Öffnung aufweist und atmosphärische Luft aus der Gehäuseumgebung und in das Leitungswassersystem über das Unterdruckventil angesaugt werden kann, wenn der Systemdruck unter atmosphärischen Druck abfällt, **dadurch gekennzeichnet, daß** das Gehäuse zwei Rohrverbinder (3) an den Enden des Kanals (2) für eine Reihenverbindung in der Abflußleitung aufweist, die Öffnung (22) durch die Wand des Gehäuses hindurch verläuft und zumindest zwei derartige Unterdruckventileinheiten (22, 30) in einem Abstand voneinander entlang dem Kanal des Gehäuses angeordnet sind.

2. Ventilanordnung nach Anspruch 1, **dadurch gekennzeichnet, daß** die Unterdruckventile einen Luftdurchflußkanal aufweisen, dessen Querschnittsfläche in etwa gleich der Querschnittsfläche des Wasserdurchflußkanals (2) des Ventilgehäuses ist.

3. Ventilanordnung nach Anspruch 1 oder 2, **dadurch gekennzeichnet, daß** die Unterdruckventile entlang der Wasserleitung mit einem Abstand von 3 cm oder mehr voneinander beabstandet sind.

4. Ventilanordnung nach einem der vorhergehenden Ansprüche, **dadurch gekennzeichnet, daß** der Wasserausflußkanal (2) des Gehäuses einen freien Durchmesser entsprechend der freien Fläche des Wasserdurchflußkanals (2) aufweist.

## Revendications

1. Système à soupapes destiné à empêcher le reflux d'un liquide contaminé à l'intérieur d'une canalisation de sortie d'eau en provenance d'un système de distribution d'eau courante sous pression, dans lequel le système à soupapes comprend un corps de soupape comprenant un canal d'écoulement (2), une paroi qui entoure le canal (2), une unité de soupape anti-vide (22, 30), qui comprend une ouverture (22) et une soupape anti-vide (30) dans ladite ouverture, moyennant quoi de l'air atmosphérique peut être aspiré depuis l'environnement du corps de soupape et à l'intérieur du système de distribution d'eau courante par le biais de la soupape anti-vide quand la pression du système descend en dessous de la pression atmosphérique, **caractérisé en ce que** le corps comporte deux raccords de tuyau (3) aux extrémités du canal (2) en vue d'une connexion en série à l'intérieur de ladite canalisation de fourniture d'eau, l'ouverture (22) est faite à travers la paroi du corps et au moins deux de ces unités de soupapes anti-vide (22, 30) sont disposées à une certaine distance les unes par rapport aux autres le long du canal du corps.

2. Système à soupapes selon la revendication 1, **caractérisé en ce que** les soupapes anti-vide comportent un canal d'écoulement d'air dont la surface en section transversale est approximativement égale à la surface en section transversale du canal d'écoulement d'eau (2) du corps de soupape.

3. Système à soupapes selon la revendication 1 ou 2, **caractérisé en ce que** les soupapes anti-vide sont espacées les unes par rapport aux autres le long de la canalisation d'eau par une distance de 3 cm environ - ou plus.

4. Système à soupapes selon l'une quelconque des revendications précédentes, **caractérisé en ce que** le canal d'écoulement d'eau (2) du corps a un diamètre libre qui correspond à la surface libre du canal d'écoulement d'eau (2).
